(19) Europäisches Patentamt
European Patent Office
Office européen des brevets

(11) **EP 0 974 815 B1**

(12) **EUROPÄISCHE PATENTSCHRIFT**

(45) Veröffentlichungstag und Bekanntmachung des Hinweises auf die Patenterteilung:
**16.09.2015 Patentblatt 2015/38**

(51) Int Cl.:
***G01F 1/66*** *(2006.01)*     ***G10K 11/00*** *(2006.01)*
***G01S 7/521*** *(2006.01)*

(21) Anmeldenummer: **99113687.0**

(22) Anmeldetag: **15.07.1999**

(54) **Clamp-On-Ultraschall-Durchflussaufnehmer-Vorrichtung**

Clamp-on ultrasonic sensor arrangement

Capteur ultrasonique de débit à serrage

(84) Benannte Vertragsstaaten:
**AT BE CH CY DE DK ES FI FR GB GR IE IT LI LU MC NL PT SE**

(30) Priorität: **22.07.1998 EP 98113670**

(43) Veröffentlichungstag der Anmeldung:
**26.01.2000 Patentblatt 2000/04**

(73) Patentinhaber: **Endress + Hauser Flowtec AG**
**4153 Reinach BL 1 (CH)**

(72) Erfinder:
• **Hagenmeyer, Heinrich, Dr.**
**79639 Grenzach-Wyhlen (DE)**
• **Schwarzenberger, Peter, Dr.**
**30926 Seelze (DE)**

• **Moser, Thierry**
**Sierentz (FR)**
• **Arx von, Marcel**
**4206 Seewen (CH)**
• **Kamber, Walter**
**4457 Dietgen (CH)**
• **Lopatin, Sergej, Dr.**
**79539 Lörrach (DE)**

(74) Vertreter: **Andres, Angelika Maria et al**
**Endress+Hauser (Deutschland) AG+Co. KG**
**PatServe**
**Colmarer Strasse 6**
**79576 Weil am Rhein (DE)**

(56) Entgegenhaltungen:
**EP-A- 0 198 731     EP-A- 0 334 795**
**US-A- 5 131 278**

**Beschreibung**

Die Erfindung beschäftigt sich mit der Schaffung von Clamp-On-Ultraschall-Durchflußaufnehmer-Vorrichtungen.

Derartige Ultraschall-Durchflußaufnehmer-Vorrichtungen werden bekanntlich von außen an einer, insb. bereits innerhalb eines Rohrleitungssystems fest installierten, Rohrleitung befestigt, ohne an dieser eine Veränderung vornehmen, z.B. eine Bohrung anbringen, zu müssen. Es ist auch kein eigens hergerichtetes Meßrohr erforderlich, wie dies bei anderen Durchfluß-Meßprinzipien, z.B. bei Vortex-Durchflußmessern, magnetisch-induktiven Durchflußmessern oder Coriolis-Massedurchflußmessern, üblich ist.

In der US-A 38 69 915 ist eine Clamp-On-Ultraschall-Durchflußaufnehmer-Vorrichtung beschrieben mit einer zwei Sensoren enthaltenden Sensoranordnung, die entlang einer Mantellinie einer Rohrleitung, in der ein zu messendes Fluid strömt, mittels eines ersten bzw. zweiten, die Rohrleitung umschlingenden Fixierbandes voneinander beabstandet befestigt ist.

In der einzigen Figur der US-A 47 38 737, nicht jedoch in deren Beschreibung ist ferner eine Clamp-On-Ultraschall-Durchflußaufnehmer-Vorrichtung offenbart mit einer ersten und einer zweiten Sensoranordnung,

- von welchen die erste entlang einer ersten Mantelgerade der Rohrleitung und die zweite entlang einer der ersten im wesentlichen gegenüberliegenden zweiten Mantelgerade mittels eines ersten und zweiten bzw. eines dritten und vierten, die Rohrleitung umschlingende Fixierbandes voneinander beabstandet befestigt sind und
- welche beide identisch zueinander aufgebaut sind.

Die letztgenannte US-A beschreibt nicht, wie die beiden Sensoranordnungen, wenn sie an einander gegenüberliegenden Mantelgeraden angeordnet sind, zueinander ausgerichtet wurden oder wie die beiden Sensoranordnungen entlang einer einzigen Mantelgerade beabstandet voneinander angeordnet sind.

Die US 5 131 278 A zeigt in den Abbildungen 5 und 5a zwei gegenüberliegende Schienen, welche mit Fixierbänder am Messrohr befestigt sind. Auf den Schienen sind Ultraschallwandler angeordnet. Die Ultraschallwandler snd entlang der Schiene verschiebbar und können in diskreten Abständen arretiert werden.

Die EP-A-0 198 731 als nächstliegender Stand der Technik zeigt eine Clamp-On-Ultraschall-Durchflussaufnehmer-Messeinrichtung mit einem Sensorgehäuse, welches mit einer Halterung zur Positionierung des Sensorgeäuses an einer Rohrwandung verbunden ist. In dem Sensorgehäuse ist ein Wellenleiter zur Übertragung eines Ultraschallsignals in das Rohr angebracht. Dieser erfolgt an einem ersten Ende des Wellenleiters. An einem zweiten Ende wird das Ultraschallsignal von einem piezoelektrischen Element in den Wellenleiter übertragen. Das piezoelektrische Element ist mittels einer Feder und einem Anschlag auf den Wellenleiter gespannt. Die Halterung ihrerseits ist am Rohr befestigt und sie ermöglicht, den Wellenleiter mit dem umgebenden Sensorgehäuse manuell auf das Rohr aufzusetzen, also einen Kontakt zwischen Rohrwand und erstem Ende des Wellenleiters in Betriebsstellung herzustellen, und ihn vom Rohr abzuheben, falls die Clamp-On-Ultraschall-Durchflussaufnehmer-Messeinrichtung nicht in Betrieb ist. Dazu ist ein Kniehebelgetriebe offenbart. Weiterhin sind die bekannten Senoranordnungen zweier baugleicher Sensoren entlang einer Mantelgeraden beschrieben. Auch hier wird nicht beschrieben, wie die beiden Sensoranordnungen, wenn sie an einander gegenüberliegenden Mantelgeraden angeordnet sind, zueinander ausgerichtet wurden.

Eine Aufgabe der Erfindung besteht darin, eine aus einer ersten und einer zweiten Sensoranordnung bestehende, verbesserte Clamp-On-Ultraschall-Durchflussaufnehmer-Vorrichtung anzugeben, die für unterschiedliche Nennweiten von Rohrleitungen verwendbar ist und die entweder entlang einer einzigen Mantelgerade oder entlang von diametral einander gegenüberliegenden Mantelgeraden fixierbar ist.

Ferner soll die Clamp-On-Ultraschall-Durchflussaufnehmer-Vorrichtung so aufgebaut sein, dass sie auswechselbare Komponenten enthält, so dass im Bedarfsfall lediglich defekte Einzelkomponenten ersetzt zu werden brauchen.

Zur Lösung dieser Aufgaben besteht die Erfindung in einer Clamp-On-Ultraschall-Durchflussaufnehmer-Vorrichtung mit einer ersten und einer zweiten Sensoranordnung, von welchen entweder beide entlang einer Mantelgerade einer Rohrleitung, in der ein zu messendes Fluid strömt, befestigt sind oder die erste Sensoranordnung entlang einer ersten Mantelgerade der Rohrleitung und die zweite Sensoranordnung entlang einer der ersten diametral gegenüberliegenden zweiten Mantelgerade mittels eines ersten bzw. zweiten, die Rohrleitung umschlingenden Fixierbandes voneinander beabstandet befestigt sind und welche beide Sensoranordnungen identisch zueinander aufgebaut sind, wobei beide Sensoranordnungen jeweils einen rohrleitungsnahen flachen Ausleger mit einer Mittellängsachse parallel zur Mantelgeraden und einem senkrecht zur Mittellängsachse einstückig daran angeformten, rohrförmigen Ansatz, einen im Ansatz längsgeführten Sensoreinsatz, der einen Ultraschall-Wandler mit einem Wandlerelement enthält, eine Sensorhaube, die über den Ansatz gestülpt ist und die mittels eines durch Verdrehen der Sensorhaube lösbaren Schnappverschlusses am Ansatz befestigt ist und eine Feder umfasst, die den Sensoreinsatz gegen die Rohrleitung drückt, und eine etwa in der Mitte der Mittellängsachse des Auslegers darin fixierte, eine Achse aufweisende Spannvorrichtung für das Fixierband umfassen.

Nach einer ersten bevorzugten Ausgestaltung der Erfindung endet der Sensoreinsatz in einer Kabelführung und die Sensorhaube ist auf der Kabelführung drehbar befestigt.

Nach einer zweiten bevorzugten Ausgestaltung der Erfindung, die auch bei der ersten Ausgestaltung anwendbar ist, umfasst die Spannvorrichtung:

- eine Spiralfeder,
- ein Federgehäuse, das mittels eines eine Zentralbohrung aufweisenden Gewindeansatzes im Ausleger auf dessen Mittellängsachse befestigt ist,
- einen Spanner mit einem ersten Ende, durch das als Bandführung das Fixierband läuft, und mit einem als Gewindebolzen ausgebildeten zweiten Ende und
- eine Mutter, die im Federgehäuse drehbar ist und die zum Spannen des Fixierbandes auf den Gewindebolzen aufgeschraubt ist.

Nach einer dritten bevorzugten Ausgestaltung der Erfindung, die auch bei der ersten oder der zweiten Ausgestaltung anwendbar ist, ist innerhalb des Sensoreinsatzes mindestens eine aus einer Luftspule und mindestens einem Widerstand bestehende Serienschaltung in der Nähe des Ultraschall-Wandlers angeordnet, und diese ist dem Wandlerelement parallelgeschaltet.

Ein wesentlicher Vorteil der Erfindung besteht darin, daß sie eine Clamp-On-Ultraschall-Durchflußaufnehmer-Vorrichtung schafft, die allen Montage-, Justier- und Reparatur-Anforderungen genügt.

Die Erfindung wird nun anhand der Figuren der Zeichnung näher erläutert, in der bevorzugte Ausführungsbeispiele dargestellt sind.

Fig. 1 :     zeigt perspektivisch eine erste nicht-erfindungsgemäße Variante einer an einer Rohrleitung bereits angebrachten Clamp-On-Ultraschall-Durchflußaufnehmer-Vorrichtung mit entlang einer Mantelgerade der Rohrleitung fixierten Sensoranordnungen,

Fig. 2 :     zeigt perspektivisch eine zweite Variante als einer erfindungsgemäße Variante einer an einer Rohrleitung bereits angebrachten Clamp-On-Ultraschall-Durchflußaufnehmer-Vorrichtung mit entlang von diametral gegenüberliegenden Mantelgeraden der Rohrleitung fixierten Sensoranordnungen,

Fig. 3     zeigt perspektivisch einen Spanner als Teil einer bei der Erfindung verwendeten Spannvorrichtung,

Fig. 4     zeigt perspektivisch und teilweise aufgeschnitten den Aufbau einer zur Erfindung gehörenden Sensoranordnung,

Fig. 5     zeigt im Längsschnitt entlang einer Mittellinie des Auslegers eine bevorzugte Ausgestaltung der Sensoranordnung von Fig. 4,

Fig. 6     zeigt im Schnitt entlang der Linie C-C eine Seitenansicht der Sensoranordnung von Fig. 5,

Fig. 7     zeigt im Längsschnitt entlang einer Mittellinie des Auslegers eine andere bevorzugte Ausgestaltung der Sensoranordnung von Fig. 4,

Fig. 8     zeigt im Schnitt entlang der Linie C-C eine Seitenansicht der Sensoranordnung von Fig. 7,

Fig. 9     zeigt in Seitenansicht einen bei der Erfindung verwendeten Ultraschall-Wandler,

Fig. 10     zeigt perspektivisch den Ultraschall-Wandler der Fig. 9, gesehen in Richtung von deren Pfeil A,

Fig. 11     zeigt perspektivisch und in Schnittansicht entlang der Linie B-B von Fig. 10 den Ultraschall-Wandler der Fig. 9 und 10,

Fig. 12     zeigt in perspektivischer Draufsicht ein erstes Montagehilfsmittel zur genauen Justierung einer Clamp-On-Ultraschall-Durchflußaufnehmer-Vorrichtung nach Fig. 2,

Fig. 13     zeigt in perspektivischer Unteransicht ein Detail von Fig. 12,

Fig. 14     zeigt in perspektivischer Draufsicht ein zweites Montagehilfsmittel zur genauen Justierung einer Clamp-On-Ultraschall-Durchflußaufnehmer-Vorrichtung nach Fig. 2, und

Fig. 15     zeigt in perspektivischer Unteransicht ein Detail von Fig. 14.

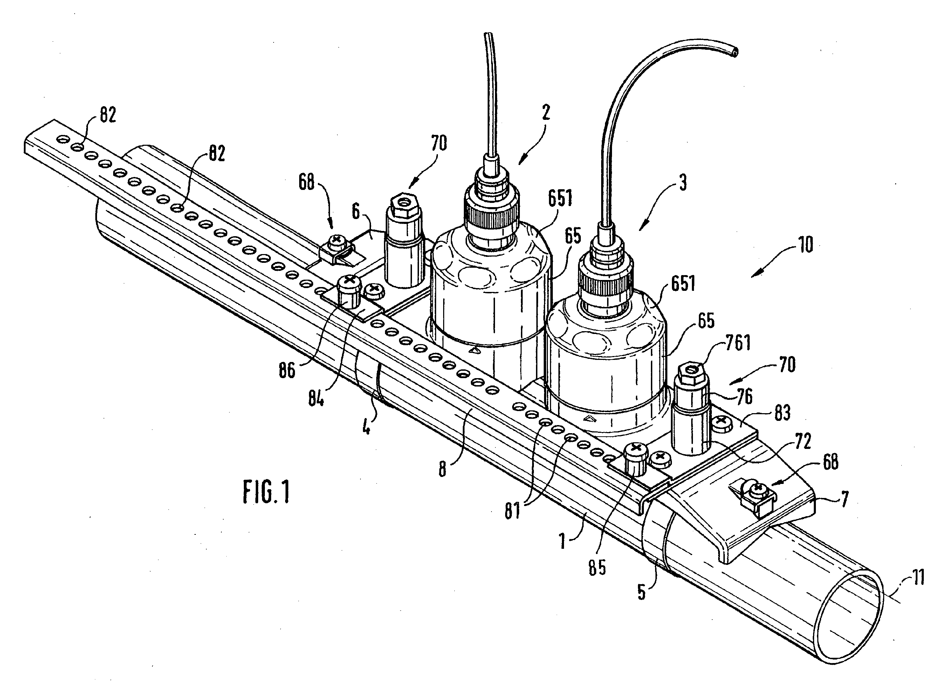

In Fig. 1 ist perspektivisch eine erste Variante einer Clamp-On-Ultraschall-Durchflußaufnehmer-Vorrichtung 10 gezeigt, die im folgenden kurz als Clamp-On-Vorrichtung 10 bezeichnet ist. Diese ist an einer Rohrleitung 1 bereits angebracht, in der ein Fluid strömt, dessen Strömungsgeschwindigkeit und/oder dessen Volumendurchfluß zu messen ist. Das Fluid ist eine Flüssigkeit, ein Gas oder ein Dampf; die Flüssigkeit kann auch Festkörperanteile enthalten.

Die Clamp-On-Vorrichtung 10 umfaßt eine erste Sensoranordnung 2 und eine zweite Sensoranordnung 3. Diese sind entlang einer Mantelgerade 11 der Rohrleitung 1 voneinander beabstandet und spiegelbildlich zueinander befestigt, und zwar mittels eines ersten bzw. zweiten, die Rohrleitung umschlingenden Fixierbandes 4, 5. Jede der beiden Sensoranordnungen 2, 3 umfaßt einen ersten bzw. einen zweiten Ausleger 6, 7.

Die Fixierbänder 4, 5 sind mit einem je eigenen, auf der Rückseite der Rohrleitung 1 liegenden und somit nicht dargestellten, lösbaren Verschluß versehen. Mit diesen Verschlüssen werden die Fixierbänder 4, 5 und damit auch die jeweilige Sensoranordnung 2, 3 auf der Rohrleitung 1 so vor-angeschnallt, daß die Fixierbänder noch in Achsrichtung der Rohrleitung 1 verschiebbar sind.

In Fig. 1 ist ferner noch ein Hilfsmittel zur Justierung der beiden Sensoranordnungen 2, 3 im optimalen Abstand voneinander dargestellt. Eine Lochstange 8 mit einer ersten und einer zweiten Lochreihe 81, 82 kann mittels einer ersten bzw. einer zweiten Laschenvorrichtung 83, 84 seitlich der beiden Sensoranordnungen 2, 3 temporär oder fest angebracht werden.

In ein Loch jeder Lochreihe greift ein Ende einer ersten bzw. einer zweiten Schraube 85 bzw. 86 ein. Da die Lochreihe 81 eine andere Teilung als die Lochreihe 82 hat - z.B. hat die Lochreihe 81 eine Neunerteilung und die Lochreihe 82 eine Zehnerteilung -, ist durch Verschieben der Lochstange 81 gegenüber den Laschenvorrichtungen 83, 84 und damit der einen Sensoranordnung gegen die andere eine sehr genaue Einstellung des gegenseitigen Abstands der Sensoranordnungen 2, 3 möglich.

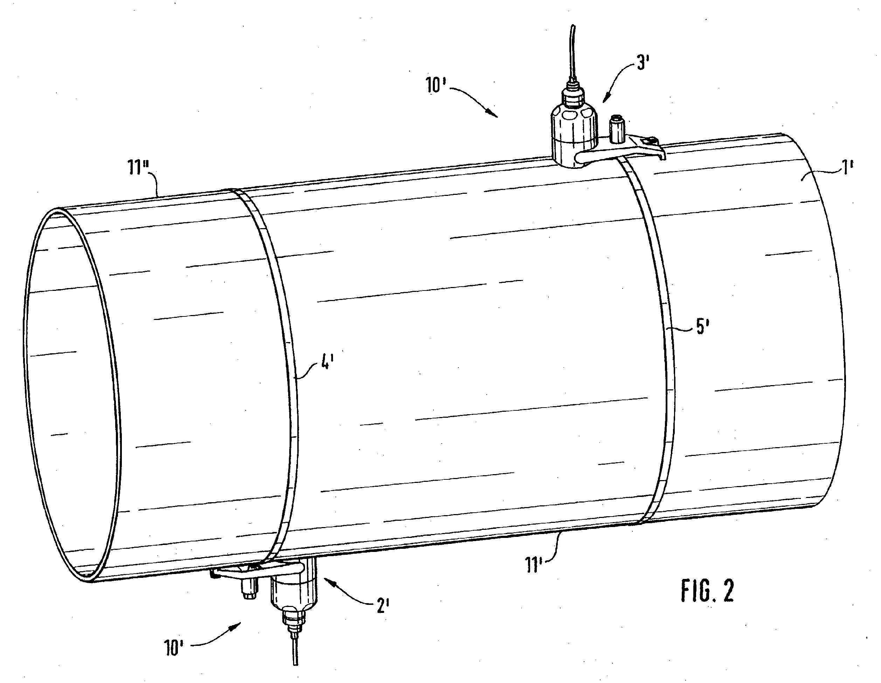

In Fig. 2 ist perspektivisch eine zweite Variante einer an einer Rohrleitung 1' bereits angebrachten Clamp-On-Vorrichtung 10' mit entlang von diametral gegenüber liegenden Mantelgeraden 11', 11" der Rohrleitung 1' fixierten Sensoranordnungen 2', 3' gezeigt. Im Vergleich mit der Anordnung von Fig. 1 ist der Durchmesser der Rohrleitung 1' wesentlich größer als der Durchmesser der Rohrleitung 1. Deshalb sind die Sensoranordnungen 2', 3' gegenüber den Sensoranordnungen 2, 3 von Fig. 1 kleiner dargestellt, obwohl es sich um gleiche Sensoranordnungen handelt.

Die Sensoranordnungen 2', 3' sind mittels eines ersten bzw. zweiten, die Rohrleitung umschlingenden Fixierbandes 4', 5' in der bei Erläuterung der Fig. 1 beschriebenen Weise befestigt.

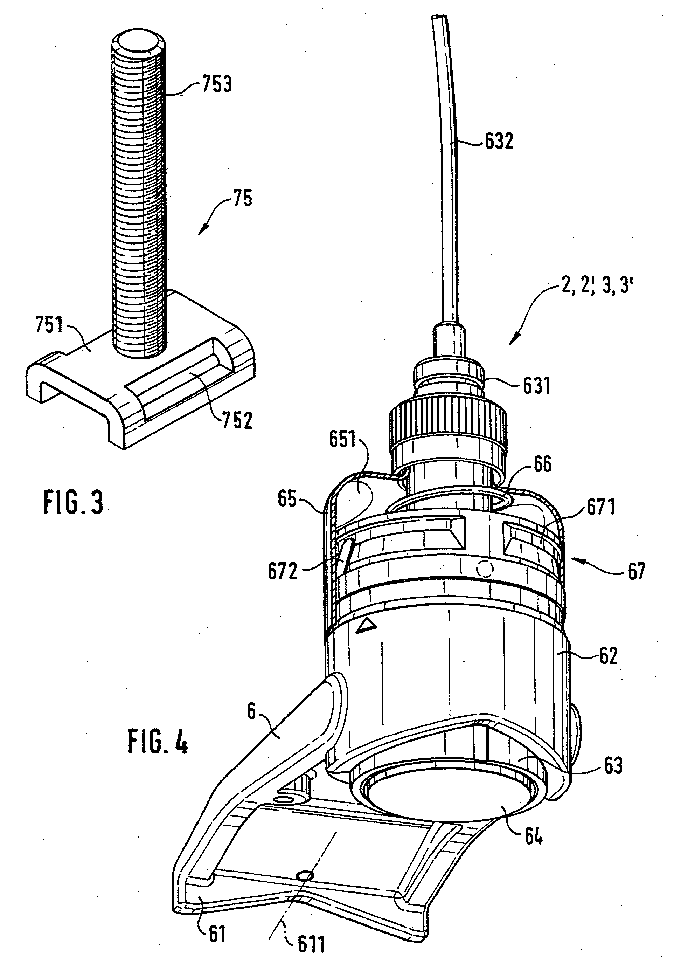

In Fig. 3 ist perspektivisch ein Spanner 75 mit einem ersten Ende 751 dargestellt. Dieses weist eine dem Querschnitt des Fixierbandes 4, 4' angepaßte Bohrung 752 auf, durch die als Bandführung das Fixierband läuft. Ferner weist der Spanner 75 einen Gewindebolzen 753 auf, der ein zweites Ende darstellt.

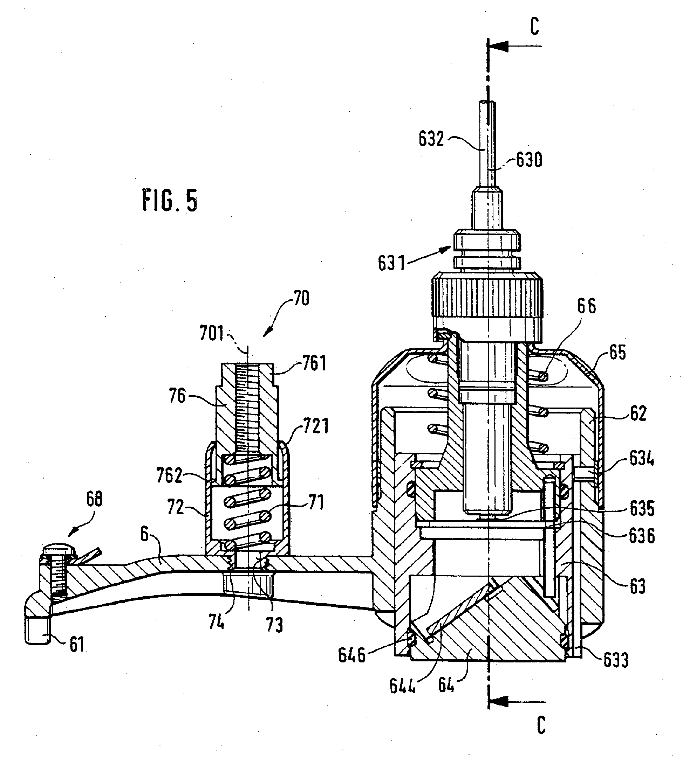

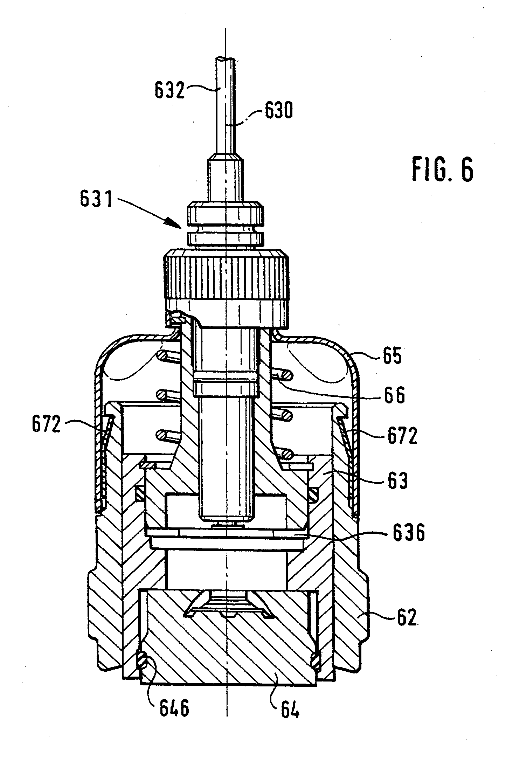

In Fig. 4 ist perspektivisch und teilweise aufgeschnitten der Aufbau der zur Erfindung gehörenden Sensoranordnung 2, 2' bzw. 3, 3' gezeigt. In Fig. 5 sind ein Längsschnitt entlang einer Mittellinie des Auslegers und in Fig. 6 eine Seitenansicht im Schnitt entlang der Linie C-C von Fig. 5 dargestellt. Die Fig. 4 bis 6 werden daher im folgenden gemeinsam erläutert.

Der rohrleitungsnahe, flache Ausleger 6 hat eine Mittellängsachse 611 und einen einstückig daran angeformten, rohrförmigen Ansatz 62. An einem von diesem abgewandten Ende 61 liegt der Ausleger 6 auf der Rohrleitung 1 bzw. 1' auf. Um zwei Berührungsstellen mit der Rohrleitung zu erreichen, ist das Ende 61 nicht eben, sondern leicht abgewinkelt ausgebildet.

Im Ansatz 62 läßt sich ein in einer Nut 633 von einer Nase 634 längsgeführter Sensoreinsatz 63 gegen eine Feder 66, insb. eine Spiralfeder, hin- und herbewegen. Der Sensoreinsatz 63 hat eine Vertikalachse 630 und enthält einen Ultraschall-Wandler 64 und wird von der Feder 66 im angeschnallten Zustand, wie er in den Fig. 1 und 2 dargestellt ist, gegen die Rohrleitung 1 bzw. 1' gedrückt.

Eine Sensorhaube 65 ist über den Ansatz 62 gestülpt und mittels eines durch Verdrehen lösbaren Schnappverschlusses 67 am Ansatz 62 befestigt. Der Sensoreinsatz 63 endet bevorzugt in einer Kabelführung 631 für ein Anschlußkabel 632, auf der die Sensorhaube 65 drehbar befestigt ist. Diese weist aus ästhetischen Gründen auf ihrem Umfang gleichverteilte Vertiefungen 651 auf.

In Fig. 4 sind ferner zum Schappverschluß 67 gehörende Vertiefungen 671 und in den Fig. 4 und 6 dazu gehörende Blattfedern 672 zu sehen. Durch Niederdrücken zur Rohrleitung 1 hin und Verdrehen läßt sich die Sensorhaube 65 vom Ansatz 62 lösen. Dadurch wird der Ultraschall-Wandler 64 zugänglich und kann gegebenenfalls ausgewechselt werden.

Etwa in der Mitte der Mittellängsachse 61 des Auslegers 6 ist eine Spannvorrichtung 70 für das Fixierband 4 angebracht, die nur in den Fig. 5 und dargestellt, dagegen in den Fig. 4, 6 und 8 nicht zusehen ist. Die Spannvorrichtung 70 hat eine Achse 701 und umfaßt eine Spiralfeder 71, die in einem Federgehäuse 72 untergebracht ist. Dieses ist mittels eines eine Zentralbohrung 73 aufweisenden Gewindeansatzes 74 im Ausleger 6 auf dessen Mittellängsachse 611 befestigt.

Die Spannvorrichtung 70 umfaßt ferner eine Mutter 76 mit einem Sechskant- oder Vierkantkopf 761, die im Federgehäuse 72 drehbar ist und die zum Spannen des Fixierbandes 4, 4' bzw. 5, 5' auf den Gewindebolzen 753 von Fig. 3 aufzuschrauben ist. Die Mutter 76 und die Spiralfeder 71 sind zweckmäßigerweise unverlierbar im Federgehäuse 72 angeordnet.

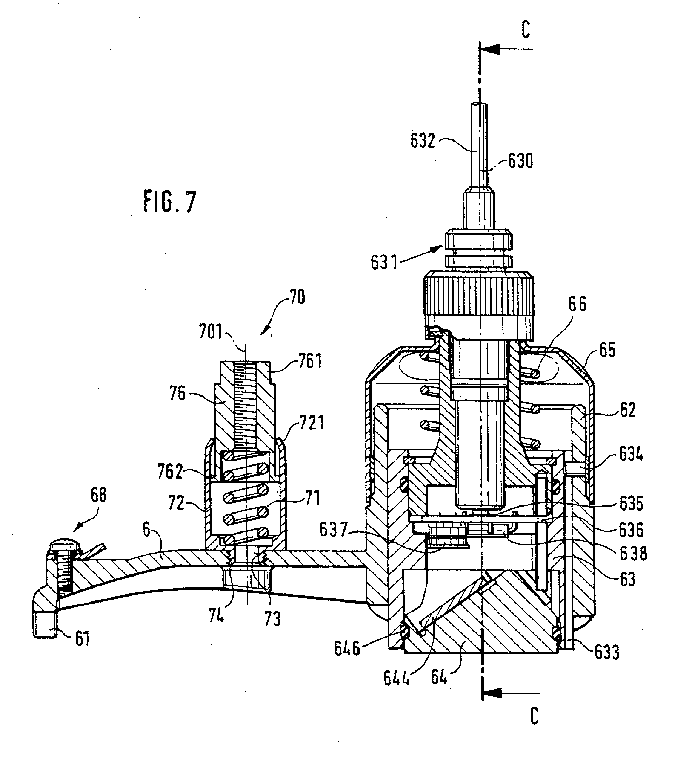

Dies kann, wie in den Fig. 5 und 7 dargestellt ist, z.B. dadurch erreicht werden, daß die Mutter 76 an einem inneren Ende mit einem Bund 762 versehen ist und daß nach dem Einsetzen von Spiralfeder 71 und Mutter 76 in das Federgehäuse 72 letzteres an seinem der Mutter 76 zugewandten Ende 721 nach innen umgebördelt wird.

Das bereits vor-angeschnallte, also vor-festgespannte, Fixierband 4, 4' bzw. 5, 5' wird durch Verdrehen der Mutter 76 auf dem Gewindebolzen 753 endgültig festgespannt und mittels der Spiralfeder 71 unter eine ständige mechanische Vorspannung gesetzt. Dadurch lassen sich temperaturbedingte Längenänderungen des Fixierbandes, die in situ auftreten, vollständig abfangen, so daß die Fixierbänder sich nicht lockern können.

In Fig. 5 und 7 ist ebenso wie in Fig. 1 schließlich noch zu sehen, daß am Ende 61 des Auslegers 6 eine Schraub-Klemm-Verbindung 68 vorgesehen ist. Diese dient zum Anschluß einer Erdungs- bzw. einer Schutzleiter-Leitung.

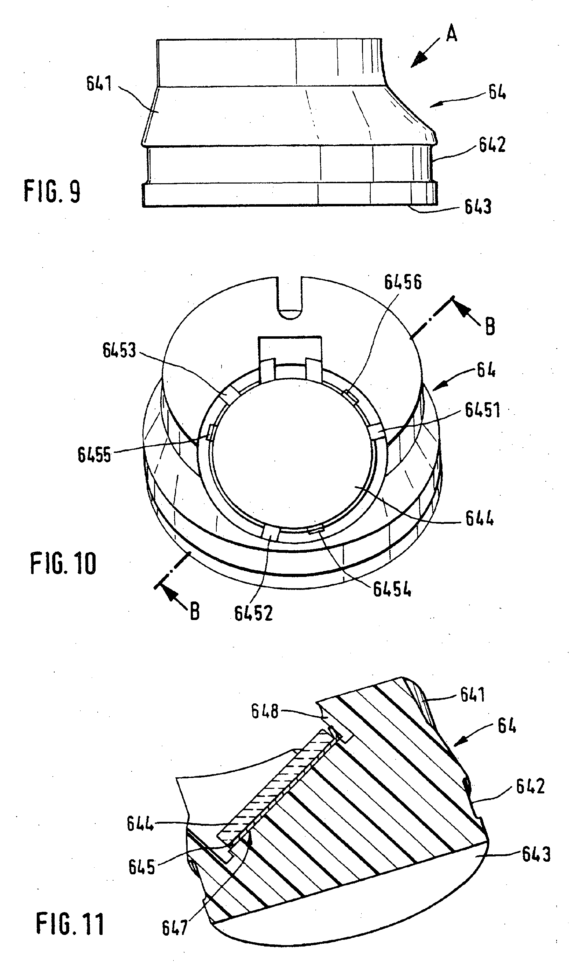

In den Fig. 9 bis 11 ist in unterschiedlichen Ansichten der jeweilige Aufbau von bei der Erfindung verwendeten Ultraschall-Wandlern dargestellt. In der Seitenansicht der Fig. 9 ist vom Ultraschall-Wandler 64 ein Substratkörper 641 zu sehen. Dieser ist kreiszylindrisch und besteht z.B. aus einem hochtemperatur-thermoplastischen Material, wie z.B. einem unverfüllten Polyetherimid (PEI), wie es unter dem Handelsnamen Ultem 1000 erhältlich ist.

Der Substratkörper 641 ist mit einer Ringnut 642 zur Aufnahme eines O-Rings 646 versehen, der nur in den Fig. 5 bis 8 dargestellt ist. Ferner hat der Substratkörper 641 eine ebene Auflagefläche 643, die im angeschnallten Zustand auf der Rohrleitung 1 bzw. 1' aufliegt.

In Fig. 10 ist perspektivisch der Ultraschall-Wandler 64 von Fig. 9 dargestellt, und zwar gesehen in Richtung von deren Pfeil A, und in Fig. 11 ist eine Schnittansicht entlang der Linie B-B von Fig. 10 perspektivisch zu sehen.

Auf dem Substratkörper 641 ist ein Wandlerelement 644 unter Zwischenlage einer Metallscheibe 645 aufgeklebt. Das Wandlerelement 644 ist scheibenförmig und besteht aus einem keramischen piezoelektrischen Material, wie z.B. aus einer PZT-5-Standard-Soft-Keramik. Die Metallscheibe 645 hat einen thermischen Ausdehnungskoeffizienten, der zwischen dem des Substratkörpers 641 und dem des Wandlerelements 644 liegt.

Die Dicke der Metallscheibe 645 ist höchstens gleich einem Viertel der Wellenlänge, die der zur Anwendung gelangende Ultraschalll in der Metallscheibe 645 hat. Diese besteht bevorzugt aus Rein-Aluminium. Sie kann aber auch z.B. aus Titan, Edelstahl, Messing oder Blei bestehen.

Als Klebstoffe eignen sich besonders gut Kleber auf Epoxidharzbasis, die eine oberhalb der zulässigen Betriebstemperatur des Ultraschall-Wandlers 64 liegende Glasübergangstemperatur aufweisen. Solche Kleber sind z.B. unter den Produktbezeichnungen AV8 und AV118 von der Fa. Ciba-Geigy, Basel/Schweiz erhältlich.

Das Wandlerelement 644 und die Metallscheibe 645 sind in einer zur Auflagefläche 643 schrägen Ebene 647 aufgeklebt. Diese bildet die Bodenfläche einer Schrägbohrung 648.

Die Metallscheibe 645 ist durch drei um jeweils ca. 120° gegeneinander versetzte Finger 6451, 6452, 6453 selbstzentrierend bezüglich der Schrägbohrung 648 ausgebildet. Ferner ist die Metallscheibe 645 durch drei gegen die Finger 6451 bzw. 6452 bzw. 6453 und um jeweils ca. 120° gegeneinander versetzte Nasen 6454 bzw. 6455 bzw. 6456 so ausgebildet, daß durch sie das Wandlerelement 644 ebenfalls zentriert wird. Die drei Nasen sind aus der Ebene der Metallscheibe 645 herausgebogen.

Aufgrund der Metallscheibe kann der Ultraschall-Wandler 64 und somit die gesamte Clamp-On-Vorrichtung 10, 10' in einem weiten Temperaturbereich eingesetzt werden, ohne daß die Verbindungsstelle von Wandlerelement und Substratkörper bei Temperatur-Wechselbeanspruchung zerstört wird. Dies ist bei Clamp-On-Anordnungen besonders wichtig, da die Temperatur von in der Röhrleitung 1 bzw. 1' strömenden Fluiden sehr stark schwanken kann.

Ferner kann aufgrund der Metallscheibe der Ultraschall-Wandler breitbandiger als ein Ultraschall-Wandler ohne Metallscheibe betrieben werden. Auch ist die akustische Anpassung zwischen Wandlerelement und Substratkörper aufgrund der Metallscheibe verbessert.

An dieser Stelle sind noch weitere Details der Fig. 5 bis 8 nachzutragen, von denen die Fig. 5 und 6 bzw. 7 und 8 zwei unterschiedliche bevorzugte Ausführungsbeispiele zeigen. Das Anschlußkabel 632 endet innerhalb des Sensoreinsatzes 63 in einem Stecker 635, der in eine Buchse eingesteckt wird. Diese befindet sich auf einer kleinen Printplatte 636, auf der Zuleitungen des Wandlerelements 644 verlötet sind. Im bevorzugten Ausführungsbeispiel der Fig. 5 und 6 befinden sich auf der Printplatte 636 keine weiteren Komponenten.

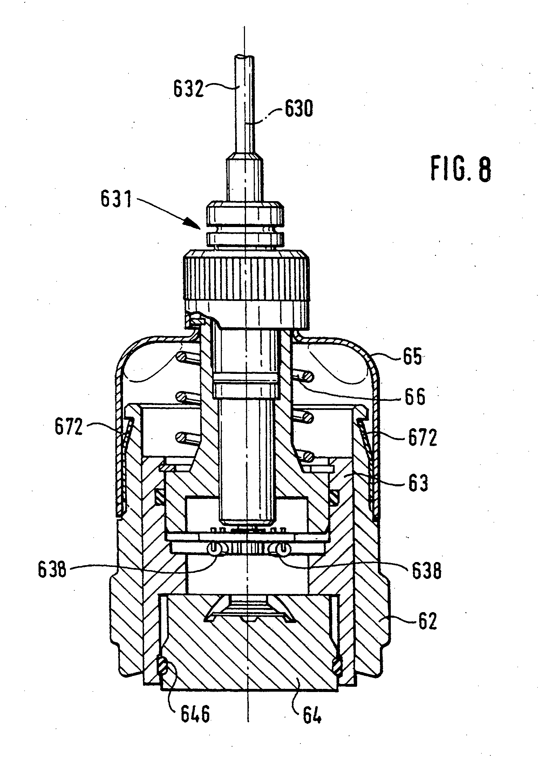

Im bevorzugten Ausführungsbeispiel der Fig. 7 und 8 ist auf der Printplatte 636 eine Serienschaltung angeordnet, die aus einer Luftspule 637 und Widerständen 638 besteht und dem Wandlerelement 644 elektrisch parallelgeschaltet ist.

Es können mehrere solcher Serienschaltungen vorgesehen werden. Mittels dieser Serienschaltung/en ist es auf überraschend einfache Weise möglich, Explosionsschutz-Vorschriften einzuhalten.

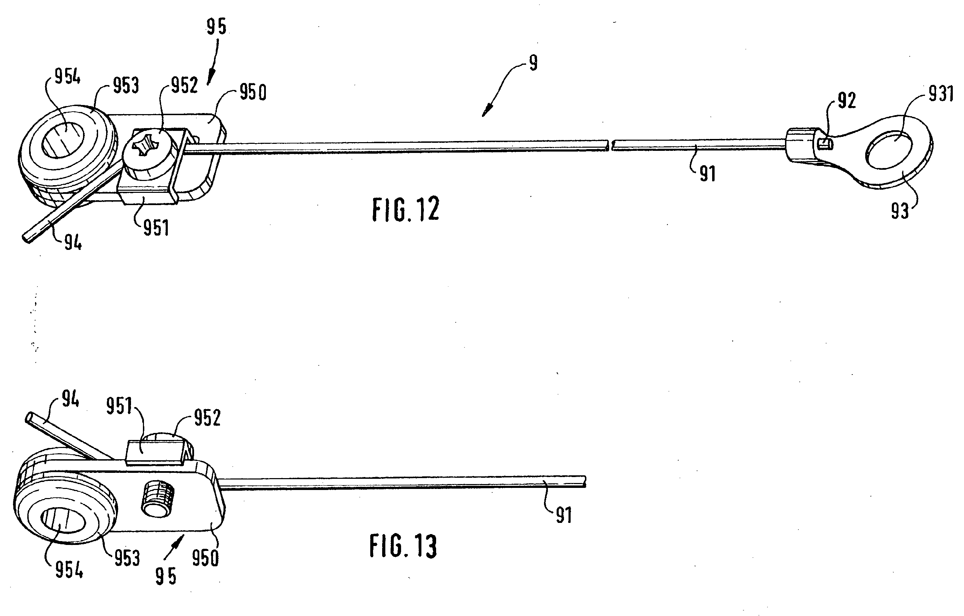

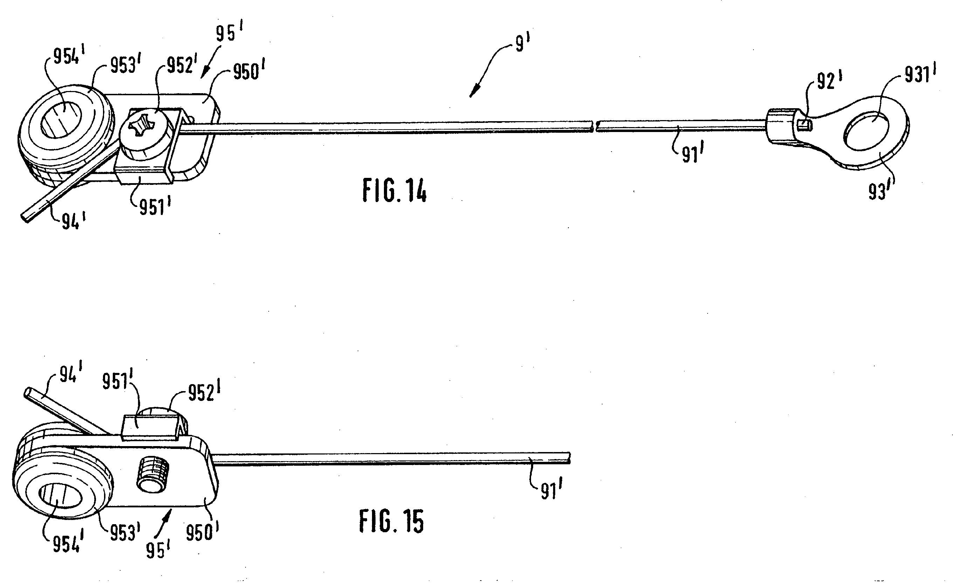

Die Fig. 12 zeigt in perspektivischer Draufsicht ein erstes Montagehilfsmittel 9 und Fig. 14 ein zweites Montagehilfsmittel 9' zur genauen Justierung der Clamp-On-Vorrichtung nach Fig. 2. Die Fig. 13 und 15 zeigen entsprechende perspektivische teilweise Unteransichten. Mittels der Montagehilfsmittel 9, 9' können die Sensoranordnungen 2', 3' von Fig. 2 genau mittig entlang der beiden Mantelgeraden 11', 11'' und damit auch um genau 180° gegeneinander versetzt angeschnallt und in dieser 180°-Position fixiert werden.

Hierzu dienen zwei möglichst nicht dehnbare Schnüre, z.B. aus einem dünnen Stahlseil, die im folgenden als ein erstes und ein zweites Seilstück 91, 91' bezeichnet werden. Von diesen ist in Fig. 12 das Seilstück 91 und in Fig. 14 das Seilstück 91' dargestellt.

Ein erstes Ende 92 des Seilstücks 91 von Fig. 12 ist in einer ersten Seilöse 93 dauernd fixiert, z.B. eingelötet oder eingepreßt. Die Bohrung 931 der Seilöse 93 hat einen Durchmesser, der etwas größer als der Durchmesser des Gewindebolzens 753 von Fig. 3 ist, so daß die Seilöse 93 mit leichtem Drücken darübergeschoben und durch leichtes Ziehen wieder davon abgenommen werden kann.

Ein zweites Ende 94 des Seilstücks 91 kann in einer zweiten Seilöse 95 temporär fixiert werden; somit kann die Länge des Seilstücks 91 zwischen den beiden Seilösen 93, 95 verstellt werden.

Die Seilöse 95 umfaßt eine Grundplatte 950, in deren eines Ende ein Auge 953 mit einer Bohrung 954 eingesetzt ist. Das Auge 953 ist dicker als die Grundplatte 950. Die Bohrung 954 hat einen Durchmesser, der etwas größer als der Durchmesser des Gewindebolzens 753 von Fig. 3 ist, so daß die Seilöse 95 mit leichtem Drücken darübergeschoben und durch leichtes Ziehen wieder davon abgenommen werden kann.

Das Ende 94 des Seilstücks 91 läßt sich mittels eines Klemmstücks 951 durch Eindrehen einer Schraube 952 in die Grundplatte 950 fixieren. Das Klemmstück 951 befindet sich unter dem Kopf der Schraube 952.

Ein erstes Ende 92' des Seilstücks 91' von Fig. 14 ist in einer ersten Seilöse 93' dauernd fixiert, z.B. eingelötet oder eingepreßt. Die Bohrung 931' der Seilöse 93' hat einen Durchmesser, der etwas größer als der Durchmesser des Gewindebolzens 753 von Fig. 3 ist, so daß die Seilöse 93' mit leichtem Drücken darübergeschoben und durch leichtes Ziehen wieder davon abgenommen werden kann.

Ein zweites Ende 94' des Seilstücks 91' kann in einer zweiten Seilöse 95' temporär fixiert werden; somit kann die Länge des Seilstücks 91 zwischen den beiden Seilösen 93', 95' verstellt werden.

Die Seilöse 95' umfaßt eine Grundplatte 950', in deren eines Ende ein Auge 953' mit einer Bohrung 954' eingesetzt ist. Das Auge 953' ist dicker als die Grundplatte 950'. Die Bohrung 954' hat einen Durchmesser, der etwas größer als der Durchmesser des Gewindebolzens 753 von Fig. 3 ist, so daß die Seilöse 95' mit leichtem Drücken darübergeschoben und durch leichtes Ziehen wieder davon abgenommen werden kann.

Das Ende 94' des Seilstücks 91' läßt sich mittels eines Klemmstücks 951' durch Eindrehen einer Schraube 952' in die Grundplatte 950' fixieren. Das Klemmstück 951' befindet sich unter dem Kopf der Schraube 952'.

Vor dem Justieren und Fixieren der Sensoranordnungen 2', 3' von Fig. 2 auf einer Rohrleitung einer gegebenen Nennweite wird die jeweilige Länge L der Seilstücke 91, 91', gerechnet von der Achse der Bohrung 931 bzw. 931' der Seilöse 93 bzw. 93' bis zur Achse der Bohrung 954 bzw. 954' der Seilöse 94 bzw. 94', anhand der folgenden Formel berechnet:

$$L = (U^2/4 + A^2)^{1/2}$$

In dieser Formel sind:

U der Umfang der Rohrleitung 1' und
A der Abstand zwischen den Achsen 701 der beiden Spannvorrichtungen 70 der Sensoranordnungen 2', 3'.

Der genaue Wert des Abstandes A wird für die Zwecke der Erfindung als im konkreten Anwendungsfall bereits ermittelt und somit als bekannt vorausgesetzt. An sich ist der Abstand A von mehreren Parametern abhängig, nämlich z.B. von dem Durchmesser der Rohrleitung 1', deren Wandstärke, der Art des zu messenden Fluids, dessen Temperatur etc.

Diese Parameter sind von vornherein bekannt oder meß-/ bestimmbar und können daher z.B. mittels eines Mikroprozessors, in den sie eingegeben werden, zu dem für einen konkreten Anwendungsfall gehörenden Wert des Abstandes A verarbeitet werden.

So können z.B. die Wandstärke der Rohrleitung 1' und die Art des Fluids mittels bekannter Ultraschall-Meßverfahren ermittelt werden. Entsprechende Meßanordnungen können Bestandteil der Clamp-On-Vorrichtung 10, 10' sein.

Nachdem der konkrete Wert der Länge L berechnet ist, werden die beiden Seilstücke 91, 91' auf diesen Wert eingestellt, indem das Ende 94 bzw. 94' auf der Grundplatte 950 bzw. 950' mittels der Schraube 952 bzw. 952' und des Klemmstücks 952 bzw. 952' festgeklemmt wird.

Nun wird der eine, z.B. der zur Sensoranordnung 2' gehörende, Spanner 75 wie oben beschrieben auf der Rohrleitung 1' mittels des Fixierbandes 4' aufgeschnallt und fixiert. Über den Gewindebolzen 753 des Spanners 75 werden die Seilöse 93 des Seilstücks 91 und darüber die Seilöse 93' des Seilstücks 91' bis zum unteren Ende des Gewindebolzens 753 geschoben.

Dann wird der andere, zur Sensoranordnung 3' gehörende Spanner mittels des Fixierbandes 5' vor-aufgeschnallt. Über den zugehörigen Gewindebolzen 753 werden die Seilöse 95 des Seilstücks 91 und darüber die Seilöse 95' des Seilstücks 91' bis zum unteren Ende dieses Gewindebolzens geschoben.

Beim Anbringen der beiden Seilstücke 91, 91' ist darauf zu achten, daß das eine Seilstück auf der einen Seite und das andere Seilstück auf der anderen Seite um die Rohrleitung 1' herum vom einen zum anderen Gewindebolzen läuft.

Das Fixierband 5' wird nun so lange in Achsrichtung der Rohrleitung 1' verschoben und zugleich in Richtung von deren Umfang so lange verdreht, bis beide Seilstücke 91, 91' gespannt sind. In diesem Fall sind die Sensoranordnungen 2', 2' justiert und um genau 180° gegeneinander verdreht.

Daraufhin werden die Fixierbänder 4', 5' endgültig gespannt und die Sensoranordnungen 2', 3' durch Anziehen der Muttern 70 festgeschraubt und somit endgültig aufgeschnallt. Danach werden die beiden Schrauben 952, 952' und somit die Klemmstücke 951, 951' gelöst, so daß die beiden Seilstücke 91, 91' von den Seilösen 95, 95' getrennt werden können. Schließlich werden die Seilösen 93, 93', 95, 95' vom jeweiligen Gewindebolzen entfernt.

**Patentansprüche**

1.  Clamp-On-Ultraschall-Durchflussaufnehmer-Vorrichtung (10, 10') mit einer ersten und einer zweiten Sensoranordnung (2, 2'; 3, 3'),- von welchen entweder beide entlang einer Mantelgerade (11) einer Rohrleitung (1), in der ein zu messendes Fluid strömt, befestigt sind oder die erste Sensoranordnung (2') entlang einer ersten Mantelgerade (11') der Rohrleitung (1) und die zweite Sensoranordnung (3') entlang einer der ersten diametral gegenüberliegenden zweiten Mantelgerade (11") mittels eines ersten bzw. zweiten, die Rohrleitung umschlingenden Fixierbandes (4, 4'; 5, 5') voneinander beabstandet befestigt sind und welche beide Sensoranordnungen identisch zueinander aufgebaut sind, **dadurch gekennzeichnet,** **dass** beide Sensoranordnungen jeweils einen rohrleitungsnahen flachen Ausleger (6) mit einer Mittellängsachse (611) parallel zur Mantelgeraden (11, 11', 11'') und einem senkrecht zur Mittellängsachse (611) einstückig daran angeformten, rohrförmigen Ansatz (62), einen im Ansatz längsgeführten Sensoreinsatz (63), der einen Ultraschall-Wandler (64) mit einem Wandlerelement (644) enthält, eine Sensorhaube (65), die über den Ansatz gestülpt ist und die mittels eines durch Verdrehen der Sensorhaube (65) lösbaren Schnappverschlusses (67) am Ansatz befestigt ist und eine Feder (66) umfasst, die den Sensoreinsatz gegen die Rohrleitung (1) drückt, und eine etwa in der Mitte der Mittellängsachse des Auslegers darin fixierte, eine Achse (701) aufweisende Spannvorrichtung (70) für das Fixierband umfassen.

2. Clamp-On-Ultraschall-Durchflußaufnehmer-Vorrichtung nach Anspruch 1, bei der der Sensoreinsatz (63) in einer Kabelführung (631) endet und die Sensorhaube (65) auf der Kabelführung drehbar befestigt ist.

3. Clamp-On-Ultraschall-Durchflußaufnehmer-Vorrichtung nach Anspruch 1 oder 2, bei der die Spannvorrichtung (70) umfaßt:

   - eine Spiralfeder (71),
   - ein Federgehäuse (72), das mittels eines eine Zentralbohrung (73) aufweisenden Gewindeansatzes (74) im Ausleger (6) auf dessen Mittellängsachse (611) befestigt ist,
   - einen Spanner (75) mit einem ersten Ende (751), durch das als Bandführung das Fixierband (4, 4'; 5, 5') läuft, und mit einem als Gewindebolzen (753) ausgebildeten zweiten Ende und
   - eine Mutter (76), die im Federgehäuse (72) drehbar ist und die zum Spannen des Fixierbandes auf den Gewindebolzen aufgeschraubt ist.

4. Clamp-On-Ultraschall-Durchflußaufnehmer-Vorrichtung nach einem der Ansprüche 1 bis 3, bei der innerhalb des Sensoreinsatzes (63) mindestens eine aus einer Luftspule (632) und mindestens einem Widerstand (633) bestehende Serienschaltung in der Nähe des Ultraschall-Wandlers (64) angeordnet und dem Wandlerelement (644) parallelgeschaltet ist.

**Claims**

1. Clamp-on ultrasonic flow sensor unit (10, 10') with a first and a second sensor arrangement (2, 2' ; 3, 3'), of which either both are secured along a straight jacket section (11) of a pipe (1) through which a fluid under measurement flows, or wherein the first sensor arrangement (2') is secured along a first straight jacket section (11') of a pipe (1') and the second sensor arrangement (3') is secured along a second straight jacket section (11"), which is diametrically opposite to the first, by means of a first or a second securing tape (4, 4', ; 5, 5'), respectively, which is wrapped around the pipe, in such a way that said arrangements are spaced at a distance from one another, and wherein both sensor arrangements are constructed in an identical manner, **characterized in that** the two sensor arrangements comprise, in each case, a flat bracket (6), which is close to the pipe, with a median longitudinal plane (611) parallel to the straight jacket sections (11, 11', 11") and a tubular neck (62), which is formed thereupon in one piece in a manner perpendicular to the median longitudinal plane (611), a sensor insert (63) guided in a longitudinal manner in the neck, said insert containing an ultrasonic transducer (64) with a transducer element (644), a sensor cover (65), which is fitted over the neck and which is secured on the neck by means of a snap lock (67) that can be released by turning the sensor cover (65), and a spring (66) that presses the sensor insert against the pipe (1), and a clamping unit (70) for the securing tape, said clamping unit having a plane (701), and being fixed in the bracket, approximately in the centre of the median longitudinal plane of the bracket.

2. Clamp-on ultrasonic flow sensor unit as claimed in Claim 1, wherein the sensor insert (63) ends in a cable conduit (631) and wherein the sensor cover (65) is secured in a rotatable manner on the cable conduit.

3. Clamp-on ultrasonic flow sensor unit as claimed in Claim 1 or 2, wherein the clamping unit (70) comprises:

   - a spiral spring (71),
   - a spring housing (72), which is fixed in the bracket (6) on the median longitudinal plane (611) of said bracket by means of a threaded socket (74) which has a central bore (73),

- a tightener (75) with a first end (751), through which the securing tape (4, 4', ; 5, 5') runs as a tape guide, and with a second end designed as a threaded bolt (753), and
- a nut (76), which can be rotated in the spring housing (72), and which is screwed onto the threaded bolt in order to tension the securing tape.

4. Clamp-on ultrasonic flow sensor unit as claimed in one of the Claims 1 to 3,
wherein at least one series circuit, consisting of at least one air-core coil (632) and at least one resistor (633), is arranged inside the sensor insert (63) near the ultrasonic transducer (64) and is connected in parallel with the transducer element (644).

**Revendications**

1. Dispositif de débitmètre à ultrasons Clamp On (10, 10') avec une première et une deuxième configuration de capteur (2, 2' ; 3, 3'), parmi lesquelles soit les deux configurations sont fixées le long d'une droite enveloppe (11) d'une conduite (1), dans laquelle s'écoule un fluide à mesurer, soit la première configuration de capteur (2') est fixée le long d'une première droite enveloppe (11') de la conduite (1') et la deuxième configuration de capteur (3') le long d'une deuxième droite enveloppe (11") diamétralement opposée à la première, au moyen respectivement d'une première et d'une deuxième bande de fixation (4, 4', ; 5, 5') entourant la conduite, les deux configurations étant espacées, et lesquelles deux configurations de capteur sont conçues de façon identique,
**caractérisé**
**en ce que** les deux configurations de capteur comprennent chacune une console (6) plate proche de la conduite avec un axe longitudinal médian (611) parallèle aux droites enveloppes (11, 11', 11") et un embout (62) tubulaire, qui y est formé en une pièce perpendiculairement à l'axe longitudinal médian (611), un insert de capteur (63) guidé longitudinalement dans l'embout, lequel insert contient un transducteur à ultrasons (64) avec un élément de transducteur (644), un capot de capteur (65), qui est placé sur l'embout et qui est fixé sur l'embout au moyen d'une fermeture à déclic (67) amovible, obtenue par la rotation du capot de capteur (65) et qui comprend un ressort (66), qui presse l'insert de capteur contre la conduite (1), et un dispositif de serrage (70) pour la bande de fixation présentant un axe (701), lequel dispositif est fixé dans la console, environ au centre de l'axe longitudinal médian de la console.

2. Dispositif de débitmètre à ultrasons Clamp On selon la revendication 1, pour lequel l'insert de capteur (63) débouche dans un conduit de câble (631) et le capot de capteur (65) est fixé sur le conduit de câble de telle manière à pouvoir tourner.

3. Dispositif de débitmètre à ultrasons Clamp On selon la revendication 1 ou 2, pour lequel le dispositif de serrage (70) comprend :

   - un ressort en spirale (71),
   - un boîtier à ressort (72), qui est fixé au moyen d'un embout fileté (74) comportant un alésage central (73), à l'intérieur de la console (6), sur son axe longitudinal médian (611),
   - un tendeur (75) avec une première extrémité (751), laquelle est traversée par la bande de fixation (4, 4', ; 5, 5') en tant que guide-bande, et avec une deuxième extrémité conçue en tant que goujon fileté (753) et
   - un écrou (76), lequel est vissé, de manière à pouvoir tourner, sur le goujon fileté à l'intérieur du boîtier de ressort (72), et qui est destiné à tendre la bande de fixation.

4. Dispositif de débitmètre à ultrasons Clamp On selon l'une des revendications 1 à 3, pour lequel est disposé à l'intérieur de l'insert de capteur (63), à proximité du transducteur à ultrasons (64), au moins un circuit série constitué d'une bobine à air (632) et d'au moins une résistance (633), et qui est couplé parallèlement à l'élément de transducteur (644).

FIG.1

EP 0 974 815 B1

FIG. 2

EP 0 974 815 B1

753

75

751

752

**FIG. 3**

632

2, 2¦ 3, 3¦

631

651

66

65

671

672

67

6

62

63

**FIG. 4**

64

61

611

FIG. 5

FIG. 6

FIG. 7

FIG. 8

FIG. 9

FIG. 10

FIG. 11

FIG.12

FIG.13

FIG.14

FIG.15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3869915 A
- US 4738737 A
- US 5131278 A
- EP 0198731 A